# EUROPEAN PATENT APPLICATION

(11) **EP 2 206 427 A1**
(43) Date of publication of application: **14.07.2010**
(21) Application number: 10150332.4
(22) Date of filing: 08.01.2010
(51) Int. Cl.: A01K 31/00, A01K 39/00, A01N 59/16, C09D 5/14

(54) **Wild animal care devices having an antimicrobial agent**

(30) Priority: 09.01.2009 US 143626; 24.12.2009 US 655217
(71) Applicant: Wild Birds Unlimited, Inc., Carmel IN 46032 (US)
(72) Inventor: Carpenter, James R., Zionsville, IN 46077 (US); McNeely, Andrea, Greenwood, IN 46142 (US); Schaust, John, Indianapolis, IN 46236 (US)
(74) Representative: Johnstone, Douglas Ian

(57) **Abstract**

A wild animal care device (100) is provided for use with wild animals, such as wild birds. The wild animal care device (100) includes a device body (102). The device body (102) includes a silver-containing, antimicrobial agent applied to the body in a sufficient quantity to exhibit antimicrobial activity.

## Description

This patent application claims the benefit of and/or priority to U.S. provisional patent application serial number 61/143,626 filed 9 January 2009, and to United States Utility Patent Application No filed 24 December 2009.

The present invention relates to wild animal care products and devices, and more particularly, to wild bird care products used for attracting, feeding, housing and caring for wild birds. Most particularly, the present invention relates to a wild animal care device into which an antimicrobial agent has been incorporated. The antimicrobial agent has a propensity to combat and eliminate, among other microbes, viruses, bacteria and fungi, thereby helping to contain the spread of bacteria, virus and fungus borne diseases.

Infections caused by microbial agents, such as bacteria, viruses and fungi are not the sole province of human beings. Rather, bacterial, viral and fungal agents exist that are capable of causing diseases and infections in most species of the animal kingdom, including bacteria, viruses and fungi that affect mammals and birds. Of particular interest to the present invention are those microbes that affect avian species.

Some of the pathogenic bacteria, virus and fungal microbial pathogens discussed in this background portion of the instant application are transmittable from bird to bird. The congregation of a plurality of wild birds at bird feeders may also facilitate the transmission of these microbial pathogens between birds. For example, when diseased birds deposit droplets of pathogen-containing feces onto the feeders, they promote indirect transmission (bird-to-feeder-to-bird) of the pathogen from an infected bird to another bird.

While wild birds are subject to a wide range of microbe related infections, there are four microbial diseases that most commonly cause significant health issues in bird species that utilize bird feeders. All four diseases can lead to the death of an infected bird. One such disease is avian salmonellosis that is caused by a group of bacteria of the genus salmonella. Salmonella Typhimurium being the most prominent representative that infects bird species. Birds can die when Salmonella bacteria spread throughout their bodies. Abscesses often form in the lining of the esophagus and crop as part of the infection process. Infected birds pass bacteria in their fecal droppings. Salmonellosis is the most common bird feeder related disease.

Mycoplasmal conjunctivitis is caused by a unique strain of Mycoplasmal gallisepticum, a parasitic bacterium. This bacterium can be transmitted by direct contact between a healthy and infected bird, or by contact with contaminated surfaces. Infected birds have red, swollen, runny, or crusty eyes. In extreme cases, the eyes become swollen shut or crusted over, and the birds become essentially blind. When infected birds die, it is usually not from the conjunctivitis itself, but rather from starvation, exposure or predation as a result of not being able to see.

Aspergillosis is a mold infection that is usually caused by Aspergillus fungi, which can develop on many grains, peanuts and associated bird food products. A bird becomes infected by the ingestion or inhalation of mold spores. The infection causes lesions in the lungs and air sacs and has been reported in many species of birds. Occasionally, outbreaks of the disease cause significant mortality in certain species.

Avian pox is a mild-to-severe disease of birds that is caused by a large virus belonging to a subgroup of pox viruses. Avian pox has two disease forms. The most common form of avian pox consists of warty nodules that develop on the featherless parts of the bird. In the second form, plaques develop on the mucous membrane of the mouth, throat, trachea, and lungs, resulting in impaired breathing and difficulty in feeding. The virus can be transmitted by direct contact between a healthy and infected bird, contact with contaminated surfaces, or by ingestion of contaminated food or water.

In addition to the dangers caused by pathogenic microbial agents through the bird-to-bird transmission of pathogenic microbes, and hence the microbe borne infections, issues also exist with regard to microbial origin diseases that are transmittable between birds and humans. Zoonoses refers to infectious animal diseases that are communicable to humans. These infectious agents can be protozoa, fungal, bacterial or viral.

Another reason for reducing the number of pathogenic microbial agents is to help protect human health, by preventing transfer of zoonotic diseases from birds to humans.

Birding refers to a hobby that encompasses a wide variety of activities that often place humans and birds in close proximity to each other, and that also place different birds in close proximity to each other. A wide variety of devices exist that are purchased and used by persons engaged in bird care as a part of their birding hobby. These devices include various items that are of interest to wild birds. By placing these devices in an area wherein the devices can be observed, the birding enthusiast can better observe the wild birds. These birding (bird care) devices include such things as, but are not limited to, various types of feeders, perches, bird baths, poles for holding feeders, decorative items, branches, suet cages, watering dishes, protective and exclusionary cages, (used to keep squirrels and larger birds off feeders) squirrel (and other pest) baffles (to keep squirrels and other non-desired creatures away from the bird feeders), bird houses, cleaning brushes, seed scoops, bird food storage containers, seed and birdfood packaging, hanging hardware, rain guards, and the like.

These devices come in a wide variety of different forms and sizes. For example, hopper feeders are designed to hold a quantity of seed-related food. Hummingbird feeders often consist of a liquid-containing vessel, for holding a quantity of a sugar-water mixture that is used to feed hummingbirds. Tubular feeders are often used for holding small sized foods, such as Nyjer® seeds, black oil sunflower seeds and the like.

Traditionally, cage-like suet feeders are provided for holding suet and suet-like materials. Suet comprises a high energy formulation of a paste-like material, such as animal fat or peanut butter that may include one or more other ingredients, such as raisins, nuts, seeds or the like.

Wild bird-related bird care devices are usually designed for outdoor use, as wild birds being outdoor creatures, and not kept within confines of rooms and houses. Typically, a wild bird care device, such as a house or feeder for use with wild birds is placed in an outdoor location where it is both observable by the user, and is likely to be visited by a bird. Once birds discover the site of the device, a wide variety of birds within the area often then begin flocking to the bird care device at all times. It has been found by the applicants that the heaviest usage times for bird feeding devices are during the day and especially in the morning near dawn, and in the evening near dusk.

The presence of a large number of birds at these bird care devices presents the potential for the spread of pathogenic microbial diseases, due to the proximity of the birds on the bird care devices. For example, many pathogenic microbial diseases spread through bird feces, which often collect upon bird care devices.

Additionally, the same risks exist for the transmission of zoonotic bird diseases from birds to man. The transference of diseases to man may occur when birding enthusiasts come in close contact with their bird care devices, such as when they refill and clean their bird feeders.

For the reasons set forth above, most, if not all bird care devices used for wild birds contain pathogenic microbes that have the potential to transmit disease and infection between birds, and also between birds and humans. As the spread of infections caused by these pathogenic microbes can be reduced by reducing the number of pathogenic microbes present, it is beneficial to reduce the number of microbes present on such bird care devices.

Cleaning and disinfecting a bird care device is one way to reduce the number of pathogenic microbes present on the bird care device. However, it would be helpful to also provide a vehicle for reducing the number of pathogenic microbes which was more "automatic," more long lasting and provided a continuous method of pathogen reduction between routine cleaning efforts.

It is therefore one object of the present invention to provide a method for providing bird care devices that includes an antimicrobial agent that has the potential to continuously combat and eliminate pathogenic microbes that the agent encounters, to thereby reduce the number of bacteria, viruses and/or fungi on a bird care device to help prevent the spread of diseases.

In accordance with the present invention, a wild animal care device is provided for use with wild animals. The wild animal care device comprises a device body. The device body includes a silver containing antimicrobial agent that is applied to the body in a quantity sufficient to exhibit antimicrobial activity.

Preferably, the silver containing antimicrobial agent comprises a controlled release, antimicrobial agent that includes silver ions in a zeolite carrier. The antimicrobial agent can be incorporated into the body of the wild animal care device, if the wild animal care device is made from a material such as plastic. On wild animal care devices (and portions thereof) made from materials such as glass and metal, the antimicrobial agent can be incorporated into a coating that is applied to the surface of the material.

Most preferably, the antimicrobial agent is provided in a controlled release form, so that the antimicrobial agent is released over a long period of time during which the wild animal care device is used. One carrier that can provide these time-released properties is a zeolite material, that, when mixed with a silver ion provides a controlled release of the silver ion, and hence, a controlled release antimicrobial action. The controlled release of the silver ion occurs through the interaction of moisture with the zeolite/silver ion complex, which causes the release of the silver ion. As a result, the silver ion will be released over time, as moisture interacts with the zeolite/silver ion antimicrobial agent.

One feature of the present invention is that the bird care devices of the present invention include an antimicrobial agent. One advantage provided by this feature is that the antimicrobial agent can help to reduce the transmission of microbial diseases, such as bacterial infections, viral infections and fungal infections. By combating and eliminating the microbes that cause these infections, the likelihood of the transmission of these infections is decreased. A reduction of the number of infection-causing microbes may well have a positive impact on the health of both birds and those humans in contact with birds and bird care devices.

One example of an antimicrobial is to incorporate silver. Silver is well known for use as a microbial agent. Although it is not suitable for all uses, it has two characteristics that make it a highly desirable antimicrobial agent. One characteristic is that, unlike antibiotics, it is less likely to be "genetically engineered around" by microbes, so as to make it ineffective. The second advantage of the use of a silver ion as an antimicrobial agent is that although the silver ion is deadly to cellular organisms, such as bacteria, viruses and fungi, it is quite benign to humans and birds.

It is also a feature of a preferred embodiment of the present invention that the silver is provided in a controlled release form. By being provided in a controlled release form, the antimicrobial activity that is imparted to a particular device will last over a longer period of time. Many of the wild animal care devices with which the present invention can be used, are designed for long term use, over a period of months or years. As such, the controlled release feature of the mixture of the present invention has the potential to provide antimicrobial activity on these devices that will exist for a period of time longer than is currently available through the application of commercially available antimicrobial cleaners that are applied over the surface of the device as a part of the device's cleaning.

These and other features of the present invention will become apparent to those skilled in the art upon a review of the drawings and detailed description presented below, that represent the best mode of practicing the invention perceived presently by the applicant.

Fig. 1 is a perspective view of a bird care pole type wild animal care device to which a plurality of different wild bird type bird care components can be attached;

Fig. 2 is an exploded view of the bird care pole system shown in Fig. 1, to better show the separable nature of the components;

Fig. 3 is a perspective view of a tube-type hanging wild bird feeder bird care device;

Fig. 4 is a perspective view of an alternate embodiment tube-type wild bird feeder bird care device;

Fig. 5 is a perspective view of a bird house for use with wild birds, such as bluebirds;

Fig. 6 is a perspective view of a hopper-type wild bird feeder bird care device;

Fig. 7 is a perspective view of a cage feeder of the type designed primarily for holding a cake of suet;

Fig. 8 is a perspective view of another tube-type "finch feeder" type wild bird care device, of the type especially well adapted for holding Nyjer® seeds;

Fig. 9 is a perspective view of a tube-type finch feeder, similar to Fig. 8 except with an inclusion of a weather guard/squirrel baffle that is placeable over the tubular-type wild bird feeder;

Fig. 10 is a perspective view of a hanging hummingbird feeder type bird care device;

Fig. 11 is a perspective view of a wire cage type suet feeder of the type that is designed for primarily for holding a cake of suet;

Fig. 11A is a perspective view of a wild bird bath having a stand;

Fig. 12 is a perspective view of a fountain;

Fig. 13 is a perspective view of a concrete wild bird bath;

Fig. 14 is a perspective view of a copper wild bird bath;

Fig. 15 is a perspective view of a nylon mesh bag that is capable of being used with either suet or Nyjer® seed;

Fig. 16 is a perspective view of a cleaning brush of the type adapted for cleaning wild bird care devices;

Fig. 17 is a perspective view of a wooden bat house;

Fig. 18 is a perspective view of a butterfly feeder;

Fig. 19 is a perspective view of a squirrel feeder;

Fig. 20 is a frontal view of a seed bag;

Fig. 21 is a perspective view of a seed container; and

Fig. 22 is a perspective view of a suet container.

An overview of the invention follows.

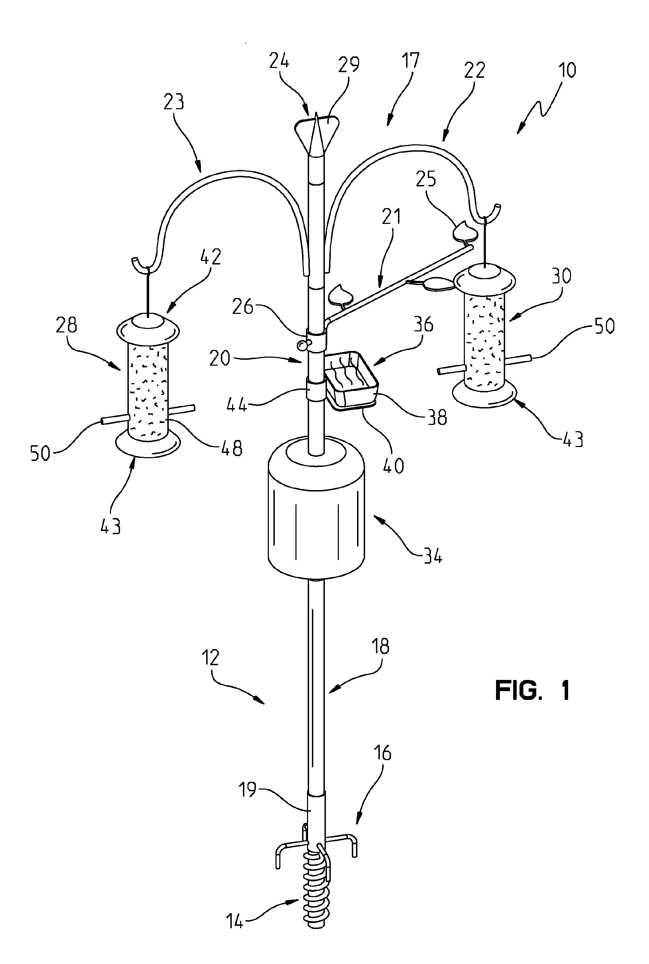

As an overview, the present invention comprises wild animal care devices in general, and in particular, bird care devices such as those shown in Figs. 1-22 to which an antimicrobial agent has been added, and more particularly, to which an antimicrobial agent containing silver ions has been added. Although the invention is directed to a wide variety of wild animal care devices, most of the exemplary embodiments show bird care devices. Therefore, it should be understood that the discussion of primarily bird care devices should not be read to limit the invention to only bird care devices. Additionally, as used in this application, the term bird care device and birding device will be used interchangeably to denote various devices, such as those shown in Figs. 1-22 that are employed in conjunction with the care, study, feeding, attracting, housing and/or observation of wild birds.

Wild animal care and bird care devices of the present invention generally are made from, but not limited to, either plastic, metal, wood, glass or a clay. The manner in which the antimicrobial agent is applied to a particular device will depend largely upon the composition from which the device is made. For example, the antimicrobial agent is best applied to plastic bird care devices, by incorporating a zeolite containing silver ion antimicrobial material, of the type manufactured by Agion Technologies directly into the plastic, when the feed stock plastic pellets are being blended and/or when the plastic pellets are being melted prior to the molding or extrusion of the melted plastic into a plastic part.

In contrast, the controlled release Agion silver ions in a zeolite carrier product is best applied to metal objects, such as bird poles through the incorporation of the antimicrobial agent into the coating material that is applied to the surface of the metal member. This coating often takes the form of either a powder coating, a paint-type coating or a plastic coating. For powder coated objects, a controlled release antimicrobial agent can be incorporated into the powder coating. For painted or other paint like coated metal materials, the controlled released antimicrobial agent can be incorporated into the paint. Plastic coatings can have the antimicrobial agent incorporated into the plastic mixture that comprises the coating. Similarly, varnish-like or painted coatings that are applied to either wood or glass, can have the antimicrobial agent mixed into the paint or varnish that is applied to the surface of the wood or glass.

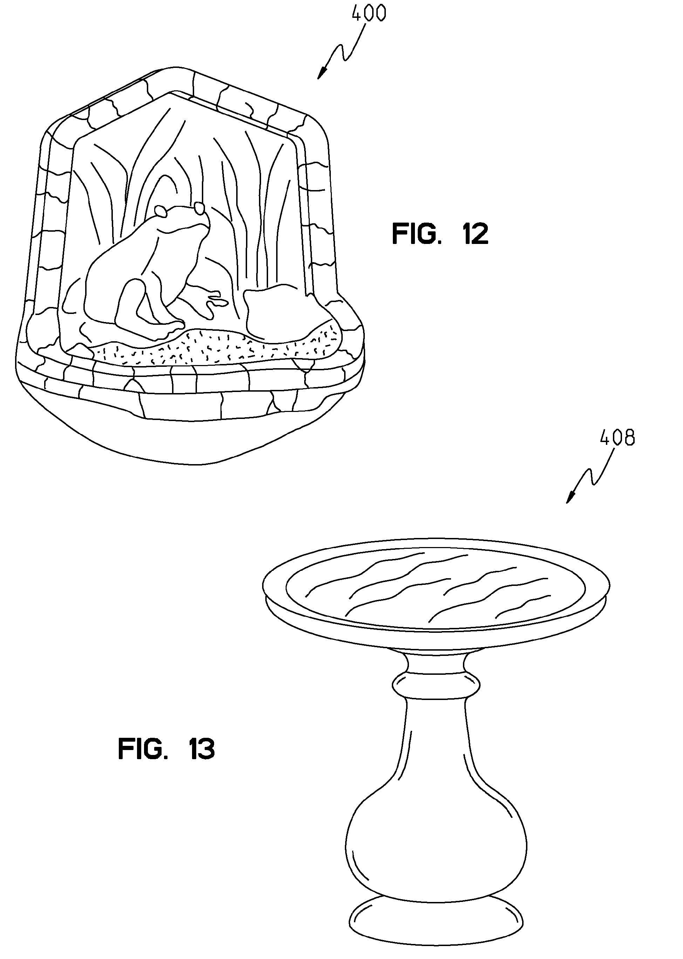

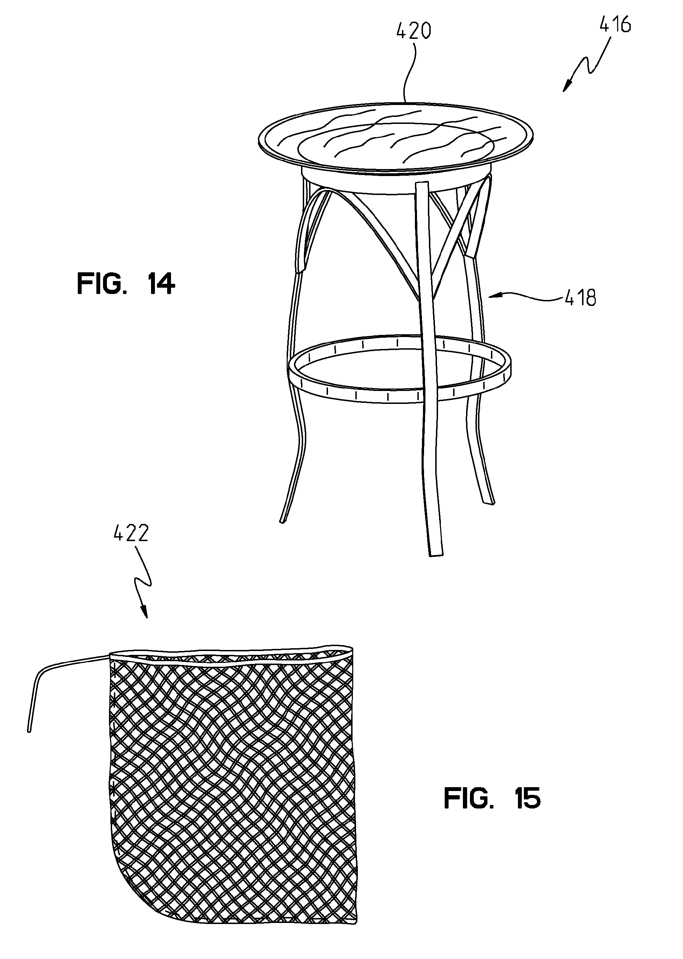

Some bird care devices are made from other materials, such as concrete, ceramic and nylon. For example, a concrete bird bath is shown at Fig. 13, a ceramic fountain is shown at Fig. 12, and a nylon mesh suet bag is shown at Fig. 15. It is believed that the zeolite and silver-containing antimicrobial agent is best applied to the concrete and ceramic as a coating that is applied to the outer surface of the concrete and ceramic.

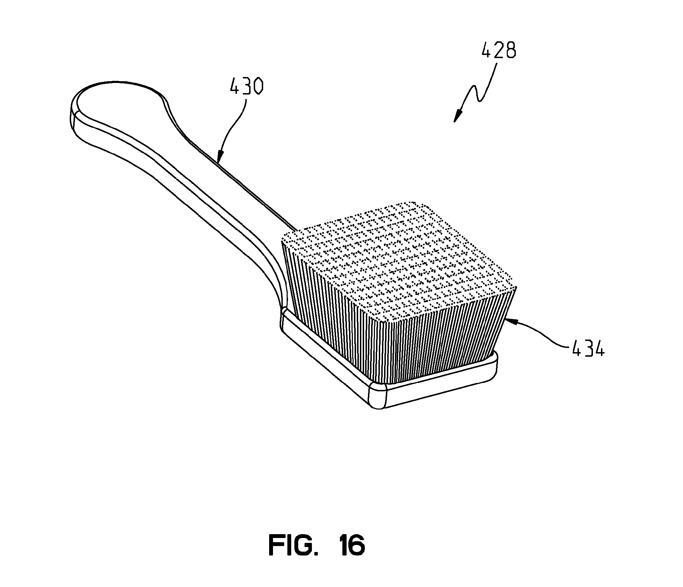

It is also believed that the best method for incorporating the antimicrobial agent onto the nylon mesh suet bag shown in Fig. 15, or onto the bristles of the cleaning brush shown at Fig. 16 is by coating the bag and/or bristles with an antimicrobial agent. One way to apply this coating is by dipping the bristles and/or nylon mesh suet or Nyjer® bag (Fig. 15) into a vat of the antimicrobial agent.

Some wood is pressure treated to have a preservative material incorporated into the fibers and cellular structure of the wood through pressure treating. In such cases, the antimicrobial agent can be incorporated into the pressure treating material in addition to, or in lieu of the antimicrobial material being incorporated into any paint or varnish-like surface treatment.

Discussed below in greater detail are various silver-containing antimicrobial agents that have utility in connection with the present invention. Following that discussion is a discussion of the various bird care devices to which the antimicrobial agent can be applied.

The patents, and the disclosures contained within the patents, for all of the various antimicrobial agents discussed below are hereby incorporated in full into the instant application. To the extent that a conflict may arise between the disclosure of one of the patents and the disclosure contained herein, the disclosure contained herein shall control.

Details of the antimicrobial agents are given below.

Preferably, the antimicrobial agents that are incorporated into the bird care devices are antimicrobial agents that are manufactured by or are similar to those manufactured by Agion Technologies of Massachusetts. Agion's materials incorporate silver ions in a zeolite carrier. The silver ions exchange with other positive ions, (often sodium) from the moisture in the environment, to thereby affect the release of silver "on demand". Such a multi faceted zeolite carrier provides a three-dimensional release mechanism that provide sufficient release of silver ions independent of particle orientation in the substrate.

In the ion exchange process, zeolite crystals containing silver ions are randomly oriented and distributed through the surface of the fiber, polymer, or coating. In conditions that support bacterial growth, positive ions in ambient moisture exchange with silver ions at reversible bonding sites on the zeolite. The exchanged silver ions are now available to control microbial growth.

Silver ions attack multiple targets in the microbes to prevent the microbes from growing to a destructive population. This silver-based antimicrobial agent fights cell growth in three ways. First, it prevents respiration by inhibiting transport functions in the cell walls of the microbes. Second, it detracts from the cells' ability to reproduce, by inhibiting cell division. Third, the silver ions disrupt cell metabolism.

It is believed that the Agion Technologies antimicrobial technology that the Applicant is incorporating into the bird care devices of the instant invention, will initially reduce microbial populations on the devices within minutes to hours, while maintaining optimal performance for years. (This information was taken from www.agion-tech.com/technology.aspx?id=156.) Of course, the particular performance of the agent is likely to vary, depending upon the particular microbe present, the manner in which the antimicrobial agent is employed, and the state of deterioration of the particular device due to weathering, etc.

As alluded to above, the preferred antimicrobial agents that are incorporated into the bird care devices of the present invention are those antimicrobial agents made by Agion Technologies, Inc., of 60 Audubon Road, Wakefield, Massachusetts. These antimicrobial agents are compounds comprised of silver ions that are bonded to a naturally occurring material called zeolite that is believed to be completely inert. The Agion material is alleged by Agion, to be able to be incorporated into virtually any polymer or coating, creating a microbe reduced surface for the finished product. When moisture comes in contact with the compound, the silver ions and the zeolite exchange with the sodium ions in the moisture, causing a controlled release of silver on-demand. Any moisture in the air causes a low level release that effectively maintains an antimicrobial surface. As the humidity increases and the environment becomes better suited for bacteria growth, more silver ion is released, until an equilibrium is achieved. This controlled mechanism provides continuous efficacy for a significant period of time that, in many cases will equal the useful life of the wild bird care device. See Agion Technologies brochure.

In addition to its antimicrobial properties, Agion's microbial technology is alleged by Agion to have no toxic effects on people, animals and plants. Testing has shown that the Agion antimicrobials are less irritating than talcum powder. Additionally, the preferred Agion antimicrobial used should be those that are registered with the EPA for use in food processing facilities and approved by the EPA and FDA for food contact surfaces although the antimicrobial agent need not be food contact grade.

Several patents exist that explain in more detail formulations and methodologies for creating compounds, such as the preferred Agion zeolite, silver and zeolite composition. The complete versions of the patents discussed below are all incorporated herein by reference as part of this disclosure.

When assessing the suitability of the various methodologies and compounds discussed below, it is important to note that three primary vehicles exist for incorporating the antimicrobial agent technology onto or into a particular device. The first method is to incorporate the antimicrobial agents into the entirety of the product, or the stock from which the product is made. This occurs most often in plastic or plastic-like materials, wherein the antimicrobial agent is preferably mixed into the stock plastic material, prior to the plastic material being molded into or extruded into the shape of the bird care device. The plastic article is then molded from the combination of the stock plastic (including any plastisizers, colorants, etc.) and the antimicrobial agent. In this way, the antimicrobial agent becomes incorporated into the entirety of the stock, and hence the entirety of the plastic product.

The second primary method by which an antimicrobial agent is applied is as a coating to an existing bird care device product. Such coatings are typically used in connection with those devices that are made from metal materials, such as bird care poles, cages and the like; and those bird care devices that are made from wood, such as wooden bird houses, suet feeders, and seed feeders. Additionally, the bird care devices made from particle board can have a powder-type coating applied to their surface wherein the antimicrobial agent is incorporated into the powder coating. Alternately, particle board components can have the antimicrobial agent incorporated into the particle board.

Several coating types are used in connection with bird care devices. A first coating type is a powder coat, that is often applied electro-statically to a metal object. The second coating type is a varnish or paint type coating that is applied to a metal, wooden, or even to a plastic article. The third application is a variation of the coating process and used primarily with wood. This variation of the coating process is often used in "pressure treated wood", wherein a coating-type material that can include an antimicrobial agent, is incorporated into the pores and fibers of a wood item through a pressure treating process. This technique is also believed to be useful with particle board.
Essentially, this "pressure treating" or "soaking" process comprises a coating process wherein the coating is applied not just to the exterior surface of a device, but also to interior pores within the material of the device.

Details of various antimicrobial technologies useful with the present invention are given below.

The technologies discussed below describe various antimicrobial agents and methods for creating such antimicrobial agents. One or more of these technologies may be used to create the wild animal care devices, such as the bird care devices of the present invention. However, it should be noted that not all of these various technologies may be useful for any or all of the wild animal care devices of the present invention.

Cummings et al., U.S. Patent No. 6,432,416 discloses a powder coating composition that may be used to coat a product that may be exposed to bacteria and fungal spores. The powder coating produces a homogenous distribution of antimicrobial agents that may promote consistent and efficient antimicrobial activity. Once coated with the antimicrobial powder coating, a substrate (such as a bird care device) may be protected from physical abuse by the film's properties and durability and from degradation due to attack by microrganisms and also potentially protecting the user from various microorganisms. The antimicrobial agent containing powder can include metals such as silver, copper or zinc ions, having antimicrobial properties.

Gerace, U.S. Published Patent Application No. US2007/018257, (publication date 28 June 2007) discusses an antimicrobial thermo plastic molding compound and is believed to be especially useful in connection with polycarbonate plastic resins. Polycarbonate plastic resins are often used to create transparent "plastic glass" of the type that is used in connection with bird tube feeders, and glass sides on a hopper feeder-type bird care devices.

Crudeen, U.S. Published Patent Application No. 2008/0057134, (publication date 6 March 2008) is owned by Agion Technologies, Inc. Crudeen discloses an efficacious anti-fungal composition that includes a mixture of traditional fungicides and ion exchange antimicrobial agents. The particular compounds and methods discussed in the Crudeen published patent application are especially useful for wood treating and wood coating applications, as an encapsulated antimicrobial agent is added to a more traditional anti-fungal agent to better fight mold and fungus in wooden structures. It can be applied as a coating on the surface of wood, or can be pressure treated into the wood.

Trogolo, U.S. Published Patent Application No. 2007/0243263, (publication date 18 October 2007) relates to methods of creating antimicrobial solutions that contain a combination of silver and copper ions. The silver and copper ions can be encapsulated in a zeolite material. The material so formed comprises a controlled release antimicrobial agent that can either: (1) be applied to the surface of an organism; or (2) be applied as a cleaner and disinfectant to a device or article of manufacture; or (3) be incorporated onto either the surface of, or into the body of an article of manufacture so that the antimicrobial formulation becomes part of the article of manufacture.

Trogolo, U.S. Published Patent Application No. 2005/0287353 (publigation date 29 December 2005) relates to an antimicrobial coating system. Trogolo's coating system includes a non-hydrophillic base coat. A top coat is applied over the non-hydrophillic base coat. The top coat can be a hydrophillic material that includes an antimicrobial agent having controlled release properties incorporated therein. The rationale for the use of the two component system is that a non-hydrophillic coating tends to be more durable than a hydrophillic coating, since hydrophillic coatings have a tendency to erode or degrade in the presence of water or moisture. As such, the non-hydrophillic base coating provides enhanced durability to the work piece, or in the case of the instant application, the bird care device.

However, one draw back that exists with the use of non-hydrophillic coatings is that most non-hydrophillic coatings have a limited ability to release antimicrobial ions. In contrast, a hydrophillic top coat is much better suited to the release of ions. The hydrophillic top coat, that is in contact with the environment, can erode under the influence of water that might be found from rain, cleaning, etc., to release antimicrobial silver ions when such water is contacted with the zeolite release agent. Meanwhile, the base coating that may itself include antimicrobial controlled released agents, such as silver and copper ions contained within the zeolite, provides a desired durability, as the hydrophillic under coating is less susceptible to wear or erosion from water-related environmental conditions.

As alluded to above, the antimicrobial agent is preferably in the form of an ion-exchange type ceramic particle, wherein the antimicrobial metal ions have been exchanged (replaced) for other non-microbially effective ions in the ceramic particles, or a combination of the foregoing with an antimicrobial metal salt. The coating is preferably a curable coating, such as an epoxy-based coating.

Trogolo, U.S. Published Patent Application No. 2008/0047894 (publication date 28 February 2008), discloses a method that is useful for incorporating antimicrobial agents into plastic materials, and also for creating powder coatings. The method disclosed by Trogolo involves individual heating of pre-polymers or polymer particles, and the micro particles (of a solid heat absorbing material) to temperatures whereby, when the two are brought into contact with each other, they will fuse to each other, but not to themselves. This method helps to maintain a good mix of antimicrobial materials within the polymer pellets that are used as a feed stock for creating plastic bird feeding devices and/or powder coatings and/or plastic coatings for use on a bird feeding device of the present invention.

Trogolo et al., U.S. Patent No. 6,866,859 relates to a device having an antimicrobial coating wherein the antimicrobial coating does not interfere with the bio-compatibility of the device, so that the device may be tolerated internally by humans (such as in implants), while still maintaining sufficient levels of antimicrobial activity to be effective to combat and eliminate microbes.

The medical device disclosed in the Trogolo '859 patent includes a hydrophillic, biocompatible top coat, and a base coat. The base coat is firmly adhered to the surface of the device. An antimicrobial ceramic component preferably comprises a zeolite with silver ions exchanged onto internal acidic sites of the zeolite, that is disbursed in one or both of a base coat and top coat. Trogolo believes that the antimicrobial agent is preferably dispersed in the base coat. Additionally, the top coat can include a polyaccharide, such as a hyaluronan.

Trogolo et al., U.S. Patent No. 7,357,949, relates to a composition that allegedly has significant utility when it is incorporated into a polymer, or incorporated into a coating that is applied to a surface of an object. The invention disclosed in the Trogolo '949 patent comprises an inorganic, antimicrobial agent, such as a silver ion complexed into a zeolite, that is coated with a hydrophillic polymer. The hydrophillic polymer is able to absorb sufficient water so as to enable the antimicrobial action of the encapsulated antimicrobial agent. These micro capsules can impart antimicrobial activity, and can be used in polymer compositions or for use in coatings.

Barry and Trogolo, U.S. Published Patent Application No. 2002/0012760, (publication date 31 January 2002), relates to a food tray having antimicrobial activities. In particular, the antimicrobial agents disclosed in Barry '760 is one that can either be applied onto the surface of the food tray or incorporated into the polymer resin from which a plastic food tray is manufactured.

Hendriks et al., U.S. Published Patent Application No. 2006/0156948 (publication date 20 July 2006), relates to color stable antimicrobial coatings, that contain silver ion for use as an antimicrobial agent. In particular, the invention disclosed in the Hendriks '948 publication is directed toward antimicrobial coatings that contain ion exchange type antimicrobial agents, especially zeolites containing silver that have excellent microbial properties without discoloration, due to the formulation of the silver compounds within the zeolites.

The particular methodology, of those methodologies disclosed above, that is used for adding antimicrobial properties to a particular bird care device is likely to depend on which of the particular methods and devices is the most suitable for a particular device, both from a functional, and also an economic perspective. From a functional perspective, the particular methodology and/or composition chosen should have good appearance characteristics and be durable so as to not erode aesthetically, and to retain efficacy to last for a considerable period of time. In this regard, the coating and/or incorporation scheme should be able to release sufficient amount of silver ions so that the silver ions will be released to have an efficacious antimicrobial quality.

Additionally, the preferred composition or method should create a controlled release of the antimicrobial agent, that will release the silver ions gradually, over a time period approaching or equaling the useful life of the device. Because of the long life of some bird care devices, such as bird poles, bird feeders and the like, it is reasonable to expect that the antimicrobial activity of the coating/incorporation may diminish over time, and that the antimicrobial action may not be effective at or near the end of the effective life of the product. Nonetheless, the addition of the antimicrobial agents discussed above to the bird care devices can give the device a relatively long term antimicrobial action.

Details of wild animal care devices (including bird care devices) to which antimicrobial agents can be applied are given below.

Presented below is a discussion of various wild animal care and bird care devices to which the antimicrobial agent material can be applied. The list below should be considered to be exemplary, and not exhaustive. Preferably, the particular method chosen (from the various methodologies discussed above) for applying the antimicrobial agent to a particular device is that methodology and that composition that is best suited for the device. To a large extent, the manner of incorporation will depend upon the material from which the bird care device (or some portion thereof) is made, or the particular process by which the bird care device is made.

For those portions of bird care devices, and bird care devices that are made from a plastic material, the best method of applying the antimicrobial agent is believed to be to incorporate the antimicrobial agent within the polymer from which the bird care device is made, so that the entire body of the bird care device includes the antimicrobial agent. This method is most likely to provide a sufficient amount of antimicrobial agents to enable the device to exhibit antimicrobial behavior over a relatively long life span of the device.

The Applicants believe that the best way to incorporate the antimicrobial agent on to metal items is to incorporate an antimicrobial agent into a powder coating that is then applied on to the surface of the particular metal parts. Alternately, for those metal parts having a "spray coating", the antimicrobial agent should be incorporated into the spray coating that is then applied to the particular metal bird care device, or bird care device component.

Additionally, it is believed that the best way to incorporate an antimicrobial agent on to a ceramic or concrete device is by applying an antimicrobial agent containing coating thereto, or by incorporating the material into the manufacturing of the material. Similarly, coatings may work well with items such as nylon suet bags and bristles of cleaning brushes used with to clean bird care devices.

In contrast, for bird care devices that are made from wood, the preferred method to incorporate the antimicrobial agent will likely be through a coating that is applied to the surface of the wood, or a coating-like material that is pressure treated into the pores and fibers of the wood.

Presented below is a discussion of a sampling of wild bird care devices into which the antimicrobial agent can be incorporated to create the antimicrobial agent bird care devices of the present invention. Unless statements exist to the contrary, it will be understood that the preferred method for incorporating the antimicrobial agent onto or in to the bird care device is that method, described above, that is preferred for the particular material from which the device is made. For example, a mention below that a particular component is made from plastic carries with it the implication that the preferred method for incorporating the antimicrobial agent into the plastic component is to incorporate the agent into the plastic stock from which the item is made, prior to the device being molded or extruded.

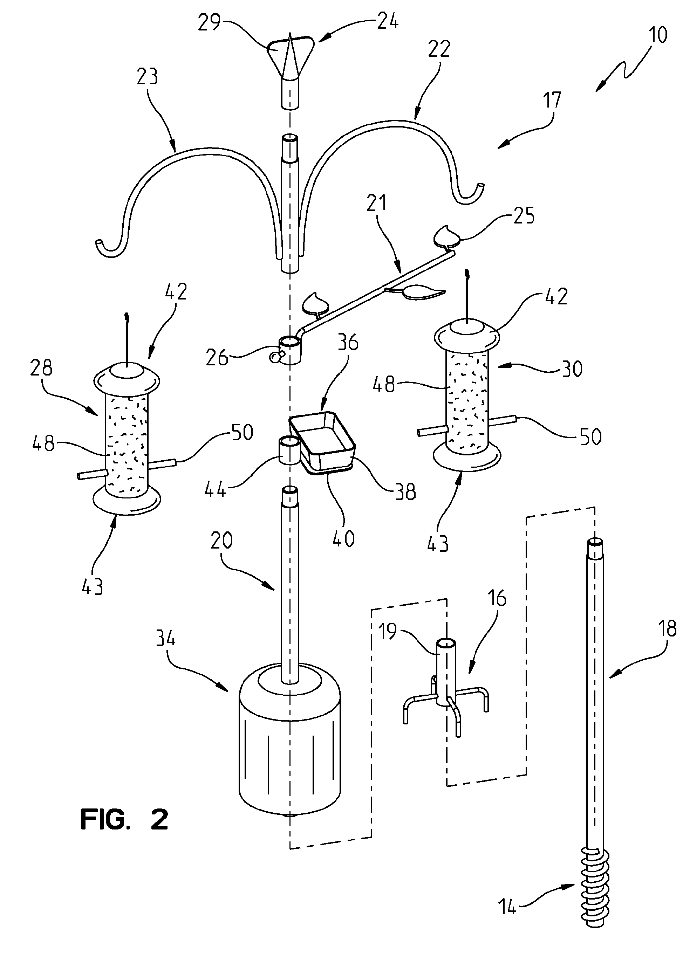

Turning first to Figs. 1 and 2, the modular bird pole type bird care device 10 including a plurality of accessories is shown. The bird pole device 12 and accessories are generally similar in their construction to the bird care pole and device shown in Carpenter, U.S. Patent No. 6,386,142, that issued on 14 May 2002 and the disclosure of which is incorporated herein by reference. Of course, the Carpenter '142 did not disclose the use of the addition of an antimicrobial agent to the particular bird care device.

The bird care device 10 shown in Figs. 1 and 2 includes a plurality of components that, as described in the '142 patent, can be added in a "mix and match" manner, to suit the user's desires. The various devices shown in Fig. 1 include a pole member 12, that includes a lower auger-like portion 14 for engaging the ground. A leg set 16 having a collar 19 for interiorly receiving and engaging the pole 12 is provided for helping to impart lateral stability to the pole 12 when it is augered into the ground. The pole 12 is comprised of a plurality of joinable pole segments including lower segment 18, and upper segment 20. Lower most segment 18 is interiorly received within the collar portion 19 of the leg set 16. The upper pole segment 20 can be fitted into the lower pole segment 18 to extend the length of the pole 12. Additionally, one or more additional pole segments (not shown) that are constructed generally similarly to pole segments 18 and/or 20 can be coupled to one or both of pole segments 18, 20 to further increase the length of the pole 12.

A shepherd hook attachment 17 can be coupled to the upper end of the upper pole segment 20. The shepherd hook attachment 17 illustratively includes a first shepherd's hook 22 member and a second shepherd's hook member 23. Additionally, a cap member 24 is fixed onto the central shaft of the shepherd's hook component. The cap member can include a decorative upper end portion 29, such as a representation of a wild bird (not shown) or wind direction indicator (not shown). Additionally, the bird care system includes a perch pole 21 that is coupled to upper shaft member 20 by a collar 26. The perch pole 21 may include decorative members, here shown illustratively as leaves 25.

The various components discussed so far are all products that are preferably made from a powder coated metal. Preferably, the silver ion/zeolite complex containing antimicrobial agent is incorporated into these bird care devices (e.g. 24, 17, 20, 16, 18, 21) by incorporating the antimicrobial agent into a powder coating, and then applying a powder coating to the outer surfaces of the these various metal components of the bird care system.

First and second tube feeders 28, 30 are coupled to the shepherd's hook members 23, 22 by some sort of hanging mechanism, such as a rope or wire hanger. The tube feeders 28, 30 are generally similar, and are made from a plurality of different materials. The tube feeders 28, 30 each include an upper cap 42 and a bottom cap 43, that are preferably made from either a powder coated metal, or from a colored, molded thermoplastic, such as polyethylene or polypropylene. The antimicrobial agent of the present invention can be added to these plastic portions of the tube feeder 28, 30 by incorporating the antimicrobial agent into the plastic composition from which the feeders 28, 30 are made.

The cylindrical seed holder portion 48 of each tube member 28, 30 is preferably made from a transparent plastic such as polycarbonate. Although polycarbonate is also a plastic material into the composition of which an antimicrobial agent can be incorporated, the antimicrobial agent may be better added to the material through a slightly different process than colored plastics, to minimize the impairment of the transparency of the polycarbonate. Such a process and composition is described above in Gerace, U.S. Published Patent Application No. 2007/0148257 (publication date 28 June 2007).

Finally, a wooden or metal perch 50 can be provided on the tube feeder 28, 30 upon which birds can perch. An antimicrobial agent is best applied to the wooden or metal perch by incorporating the antimicrobial agent into a coating applied to the metal or wood of the perch 50. Additionally, the perches 50 can include a plastic sleeve that interiorly receives the metal perch so that the sleeve (not shown) fits over and covers the metal perch. As with other plastic components, the antimicrobial agent can be incorporated into the plastic of the sleeve.

A bowl-like feeder/water dish assembly 36 is also coupled to the upper shaft member 20. The feeder 36 includes a transparent plastic dish 38, that rests on a ring-like metal rail holder 40. Metal ring holder 40 includes a metal collar 44 for coupling the feeder holder 40 and dish 38 to shaft 20. The metal components namely, holder 40 and collar 44 preferably have their antimicrobial agent applied to them through the incorporation of the antimicrobial agent into a powder coating that is then powder coated onto the components. The polycarbonate feeding dish 38 should have its antimicrobial agent incorporated into it in much the same manner that the antimicrobial agent is incorporated into the polycarbonate cylindrical seed-holding tube 48 of the tubular feeders 28, 30.

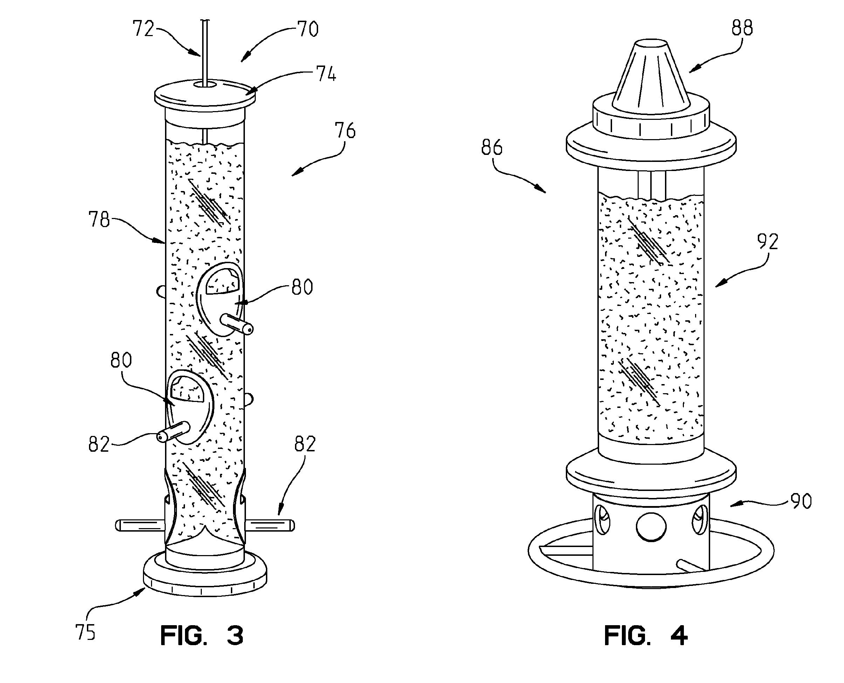

Another embodiment tube feeder 70 is shown at Fig. 3. Tube feeder 70 includes a hanger 72 that can preferably be made from a plastic material, a metal material or a rope. The body of the tube feeder includes a top cap 74, a base 75 and a cylindrical body 76 extending between the cap 74 and base 75. Preferably, the cap 74 and base 75 are made from an injection molding process and are made from plastic. Alternately, they can be made from metal.

The cylindrical body 76 includes a polycarbonate seed holding cylinder portion 78 that is made from a polycarbonate material, or other clear plastic, such as Lucite® brand polymethyl methacrylate, or Lexan® brand polycarbonate or the like. Additionally, the cylindrical body 76 includes feed hole grommet members 80, that are made from a metal such as die cast zinc or the like; or plastic. The colored feed hold grommets 80 are disposed adjacent to the feed holes, and include perches 82 on which the birds can perch while feeding from the feed dispensing holes. The perches 82 can be made from metal, wood or plastic.

Preferably, the antimicrobial agent is incorporated into all of the plastic portions by the incorporation of the zeolite complex silver ion created by Agion Technologies into the plastic, prior to, or during molding/extrusion, so that the antimicrobial agent is "molded into" the plastic. Alternately, if the cap 74 and base 75 are made from metal, they can include a antimicrobial agent containing coating, as can the perches 82 if they are made from a wood material. Although the plastic members can have an antimicrobial coating (instead of an antimicrobial incorporation), it is preferred to incorporate the antimicrobial agent into the plastic.

In Fig. 4, another alternate embodiment tube feeder 86 is shown, that includes a cap 88, a cylindrical seed holding body portion 92 and an injection molded plastic, perch containing base 90.

All members 88, 90, 92 of the tube feeder 86 are preferably made from plastic, albeit different plastics. The cylindrical portion 92 is made from a clear polycarbonate or polymethyl methacrylate, and the top cap 88 and bottom base 90 are made from a polypropylene. Alternately, the cap 88 and base 90 can be made from a metal. For those elements of the feeder 86 that are made of plastic, the preferred method for incorporating the antimicrobial agent into the plastic is by mixing the zeolite complex silver in with the plastic prior to molding. For those elements that may be made from metal, the preferred method of incorporating the antimicrobial is to incorporate the antimicrobial agent into the coating that is applied onto the metal, or into a paint used to paint the metal.

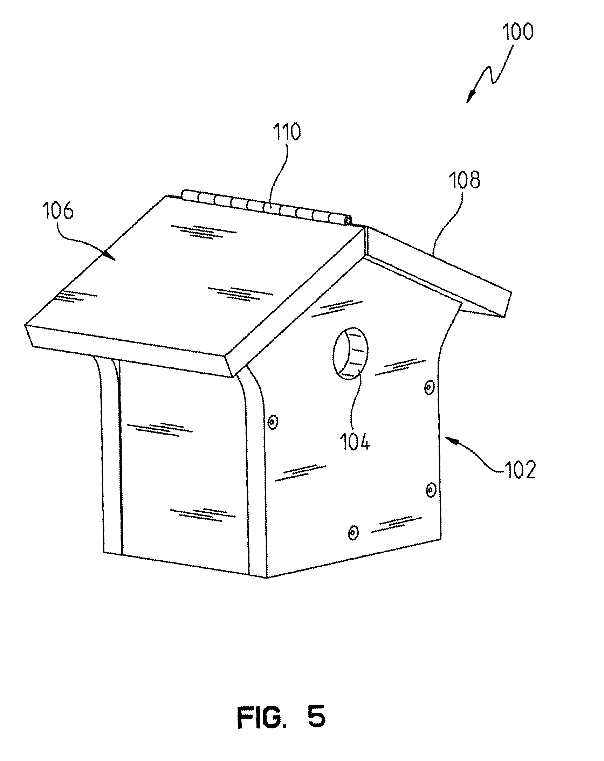

At Fig. 5, a bird house 100 is shown. Bird houses of the type shown in Fig. 5 are typically made either from wood, or alternately, from a plastic, and preferably a recycled plastic, such as recycled milk bottles, detergent bottles. Alternately, bird house 100 can be made from a ceramic or clay material or the like. Bird house 100 shown in Fig. 5 includes a lower body portion 102 that includes a portal 104 through which birds enter and leave the interior of the bird house 100. First and second roof panels 106, 108 cover the body portion 102. A hinge 110 is provided for hingedly coupling one of the two roof panels 106, 108 such as first roof panel 108 to the bird house 100. By making first roof panel 106 hingedly coupled to the remainder of the bird house 100, one can lift the panel 106 to gain access into the interior of the bird house 100 to thereby facilitate the cleaning of the bird house, or the placement of food or nesting material within the interior of the bird house 100.

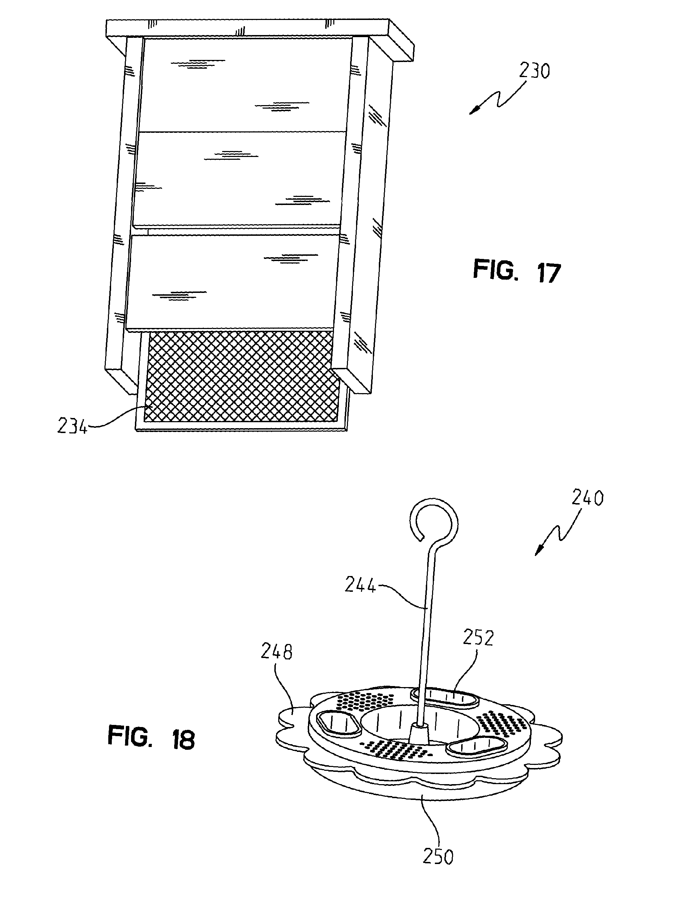

Turning now to Fig. 17, a bat house 230 is shown that has many similarities to bird house 100. Bat house 230 is preferably constructed from wood or re-cycled plastic. Rather than having a hole 104 (Fig. 5) through which the animal can enter the house 100, bat house 230 includes an open bottom 234 through which the bats enter into the interior of the house 230. A mesh material is placed over one or more of the interior walls or roof to provide a gripping surface for the bat's claws to grip, to allow the bat to hang within the interior of the house 230.

For those bird house 100 (and bat house 230) components made from plastic, the preferred method for applying the antimicrobial agent is by incorporating the antimicrobial agent into the plastic stock from which the components are made. For those components of the bird house 100 and bat house 230 that are made from wood, the preferred method for incorporating the antimicrobial agent is to either incorporate the antimicrobial agent into the surface coating (varnish or paint) that is applied to the surface of the bird house 100; or alternately, to pressure treat the wood with an antimicrobial agent containing pressure treatment material of the type that is likely to cause the antimicrobial agent to flow into the fibers and cellular structures of the wood. The metal hinge may be treated by providing it with an antimicrobial powder coating or paint coating. The mesh of the bat house may be treated by dipping the mesh in a solution of silver-containing anti-microbial agent, or by incorporating the agent into the plastic mesh.

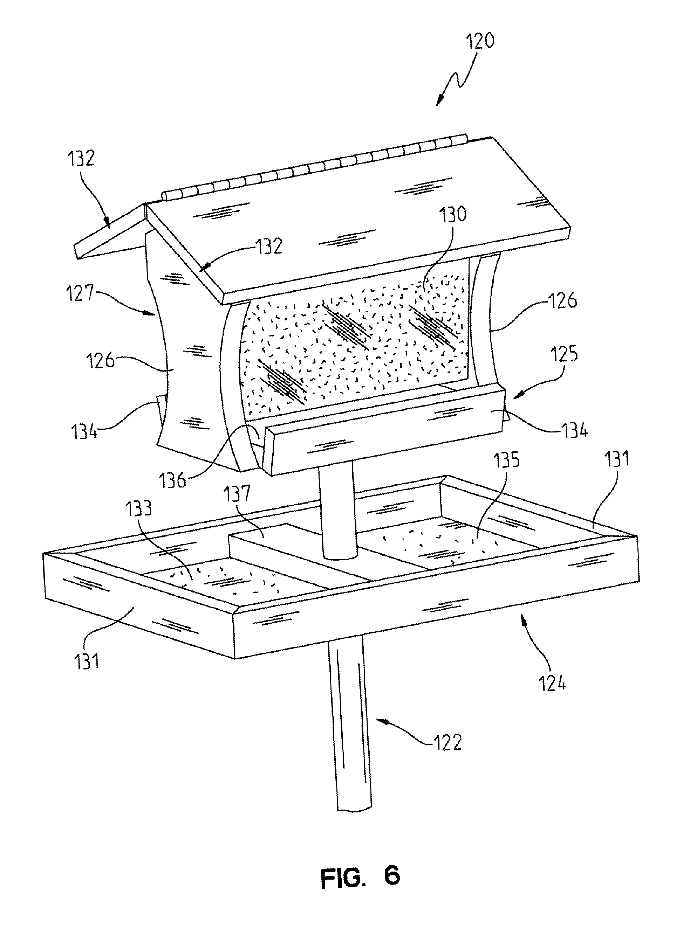

Turning now to Fig. 6, a hopper-type feeder 120 is shown that is mounted upon a metal pole 122. A separate seed catching tray 124 (which can be made of wood, plastic and/or metal) is disposed below the hopper feeder 120, and provides a surface for both catching seeds that are spilled out of the hopper feeder, and also for providing a surface on which birds can perch. The bird feeder includes a perch/tray member 125 that includes a wooden frame member 134, that perimetrally extends around base portion 136, that underlies the hopper portion 127 of feeder 120. The hopper feeder 120 itself includes a pair of upstanding end walls 126, and a pair of polycarbonate or acrylic, clear plastic side walls 130. A pair of roof panels 132, that are similar to roof panels 106, 108 of birdhouse 100 in Fig. 5 are provided to serve as a roof for covering the interior of the hopper feeder 120. The end walls 126, roof panels 132 and base member 136 of the birdhouse 120 are preferably made either from a wood material or recycled plastic material.

The seed tray member 124 includes an upstanding perimetral wall 131 that encloses a base portion formed primarily from first 133 and second 135 removable metal grates and a wooden support member 137. The wooden support member 137 extends between opposed portions of the perimetral wall 131. The wall serves as a perch for wild birds, and a containment wall for containing seed on the grates 133-135. The grates 133, 135 serve as platforms for holding wild bird seed or other feed. The tray feeder member 124 also includes a central aperture for interiorly receiving pole segment 122, and a locking mechanism (not shown) for fixedly positioning the seed tray 124 on the pole segment 122.

An antimicrobial agent can be applied to the bird hopper feeder 120 and tray 124 of Fig. 6 in a manner similar to that discussed above for those components that are made from similar materials. In particular, the antimicrobial agent should be an Agion brand zeolite complexed ionic silver, that is incorporated into the stock material from which the polycarbonate or acrylic windows 130 are made, and the recycled plastic material from which the hopper feeder 120 and tray 124 are made (to the extent that they are made from recycled plastic material). To the extent that any of the components are made from wood, the antimicrobial agent should be added as a coating or as a pressure treatment. The metal of the pole 122 and the metal of the metal tray 136 of the tray feeder should have the antimicrobial agent incorporated by placing the antimicrobial agent within the coating used to coat these metal parts.

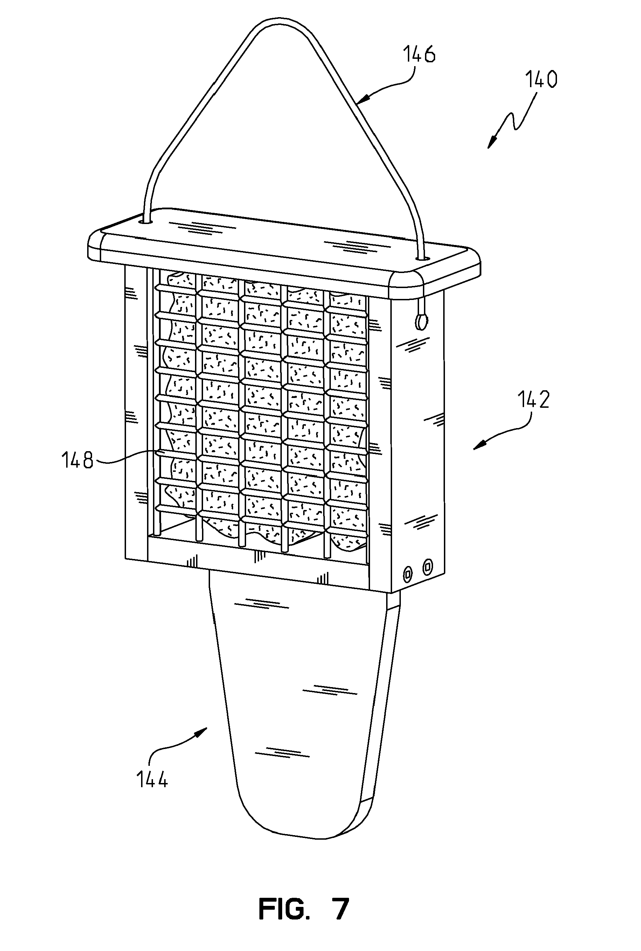

Turning now to Fig. 7, a suet feeder 140 is shown that is especially well adapted for use with woodpeckers. The suet feeder 140 includes a plastic body 142 having a downwardly extending plastic tail rest 144, against which a woodpecker eating from the feeder 140 can rest his/her tail. A hanger 146 is provided for hanging the suet feeder 140 on a tree branch or shepherd's hook , and a cage member 148 is provided that defines an interior into which a suet cake can be placed. Although the plastic body 142 of the tail rest 144 is preferably made from recycled plastic, the tail rest 144 can also be made from wood. The cage 148 is preferably made from a powder coated or otherwise painted metal material. Alternately, cage 148 can be a plastic coated metal, or can be a molded plastic part.

To incorporate the antimicrobial agent into the suet feeder 140, the antimicrobial agent is added to the particular component in a manner suitable for the material from which the component is made, and in manner similar to that discussed above in connection with the other bird care devices. Namely, it is generally believed best to incorporate the silver ion containing zeolite complex antimicrobial agent into the plastic stock prior to molding the plastic component; and to incorporate the zeolite and silver ion complex into the coating materials with which other wood and metal products are coated. For plastic coating, such as the plastic coating that can be placed on a metal cage 148, the antimicrobial agent can be incorporated into the plastic of the plastic coating in a manner similar to which the antimicrobial agent is incorporated into the plastic stock of the plastic body 142 and plastic tail rest 144.

In order to avoid unnecessary redundancies in the remainder of the application, further descriptions of the various bird care devices will be confined to describing the devices, the various components of the devices and the materials from which they are made.

The foregoing discussion will serve as a guide for determining the proper manner in which to incorporate the antimicrobial agent into a particular component of a bird care device. As discussed in connection with the bird devices of Fig. 1-7, the best method for incorporating the antimicrobial agents into plastic is to mix it in with the plastic stock prior to molding. With wood and metal components, the best way perceived presently to incorporate the antimicrobial agent into the bird care device component is to incorporate the antimicrobial agent into the coating that is applied to the surface of the component. However, the methods by which the antimicrobial agent is incorporated into paint and varnish-like coatings, will differ from the manner in which the antimicrobial agent is added into powder coatings, and will also likely differ from the manner in which the antimicrobial agent is incorporated into a plastic coating.

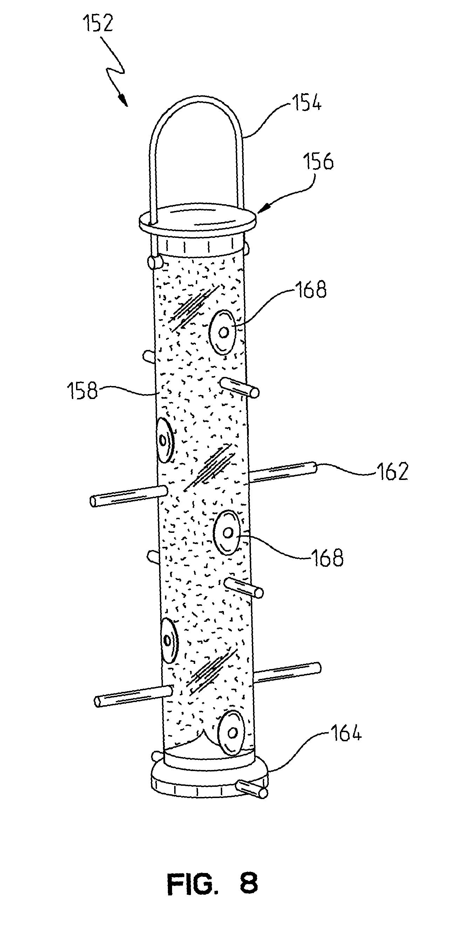

Turning now to Fig. 8, a tube feeder 152 is shown that has a metal handle/hanger 154 and a plastic cap 156. The tube feeder 152 includes a generally cylindrical seed holding polycarbonate body 158 that includes plastic feed hole grommets 168. Grommets 168 are comprised of a material different than the polycarbonate from which the cylindrical body portion 158 is made. For example, the feed hole grommets 168 can be made of a metal or a polypropylene material. A plurality of metal, wooden or recycled plastic perches 162 are attached to the cylindrical body upon which birds can rest. A plastic or metal base 164 is disposed at the bottom of the tube feeder 152.

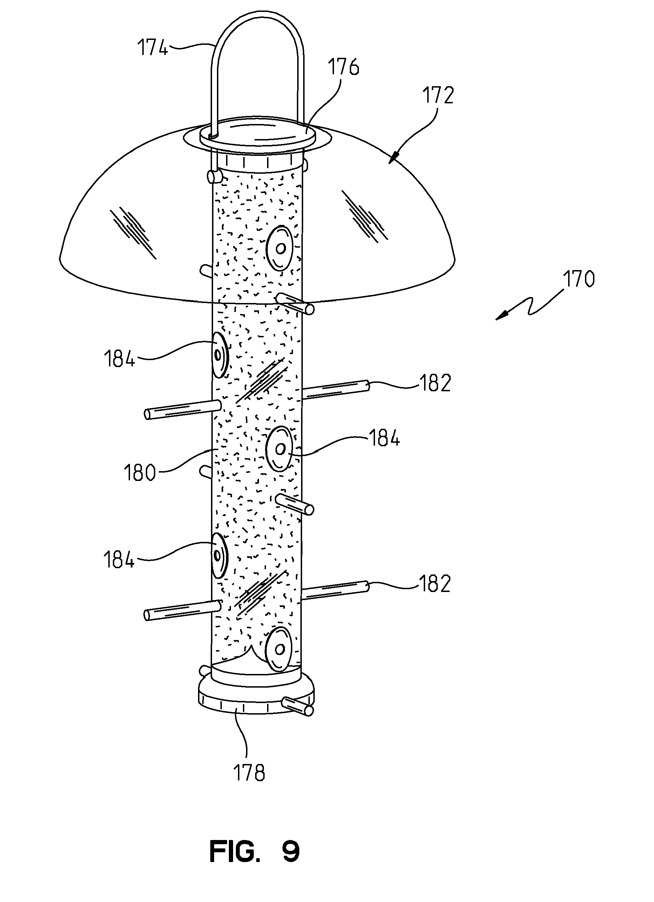

The tube feeder 170 shown in Fig. 9 includes a polycarbonate, hemispherical weather shield 172 disposed over the feeder 170 to help protect birds from elements such as rain. Polycarbonate weather shield 172 also serves as a squirrel baffle, because squirrels trying to access the feeder by traveling down the powder coated metal hanger 174 will slide off the upper surface of the polycarbonate weather shield 172, and fall off of the tube feeder 170, rather than being able to gain a footing on a perch 182 on the tube feeder 170 and eat the seeds therefrom.

The tube feeder also includes a polycarbonate cylindrical body 180 that is disposed between the metal top cap 176 and the metal base cap 178. The metal top cap 176 and metal base cap 178 can be either powder coated, painted, or dipped in plastic. Alternately, caps 176, 178 can be made from plastic. A plurality of plastic or wood perches 182 are coupled to the cylindrical body 180. Plastic grommets 184 are formed adjacent to the feed holes. The plastic grommets 184 preferably made from a non-polycarbonate plastic, such as polypropylene or the like; or may be made from metal.

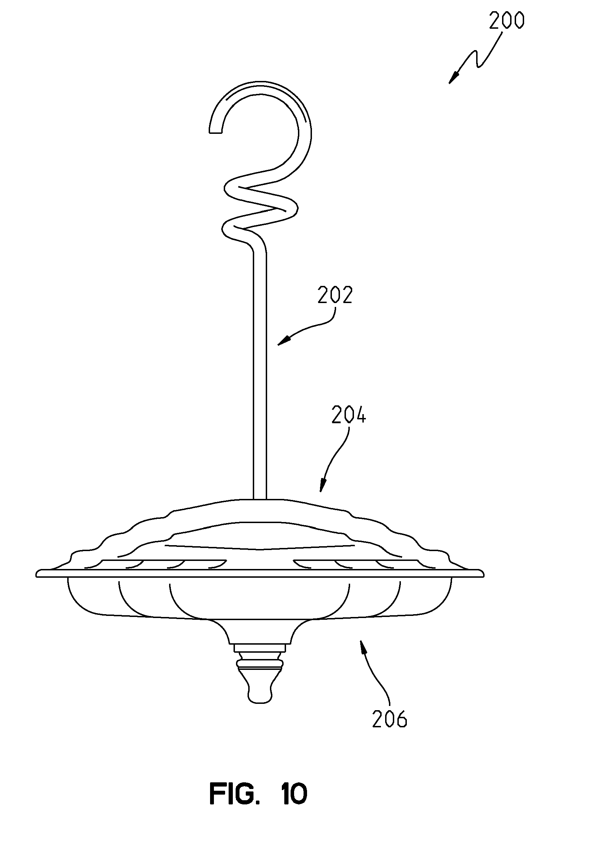

A hummingbird feeder 200 is shown in Fig. 10. The hummingbird feeder 200 includes a metal hook, or branch engaging hanger 202, a clear plastic top member 204, and a painted metal or molded plastic base member 206 that can be removably coupled to the plastic top member 204. It also has ports (holes) where the birds can access the food and plastic (PVC) nectar guard tips. The top and bottom members 204, 206 define an interior cavity into which hummingbird food is placed.

A butterfly feeder 240 is shown in Fig. 18. Butterfly feeder 240 is constructed similarly to hummingbird feeder 200, and includes a metal or plastic branch engaging hook 244, an opaque plastic top member 248, and a clear plastic base member 250. The feeding holes 252 in the plastic top member 248 are especially adapted to accommodate butterflies.

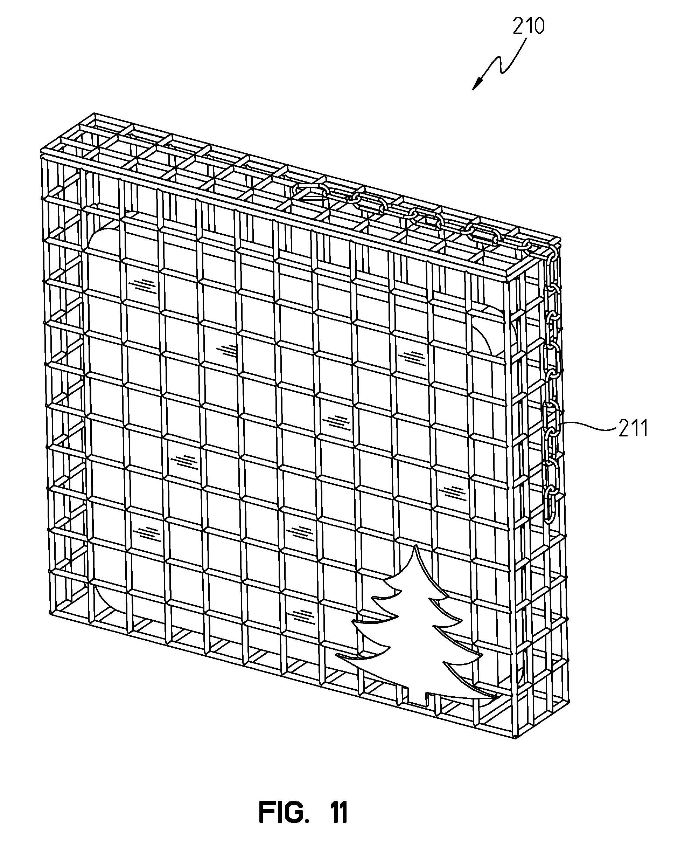

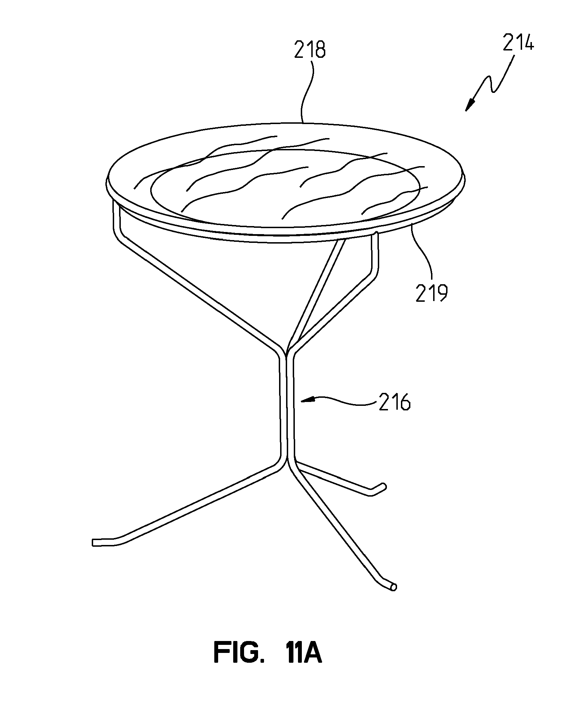

A suet cage 210 is shown in Fig. 11. Suet cage 210 preferably comprises a metal cage having either a powder coating, or a plastic coating thereon. A chain 211 is provided that can serve as a hanger.

A bird bath 214 is shown in Fig. 11A. The bird bath has a metal stand 216 that includes either a powdered metal or painted coating. A plastic dish 218 forms the bird tray in which water is placed for the bird bath, and is supported by a ring member 219 of the stand 216. Alternately, the dish may also be made from metal, ceramic, etc.

A concrete bird fountain device 400 is shown in Fig. 12, and a concrete bird bath 408 is shown in Fig. 13. It is believed that the best manner for applying an antimicrobial agent to the concrete bird bath 408 and the concrete bird fountain 400 is by applying a coating to the concrete that contains an antimicrobial agent.

In Fig. 14 there is shown a ceramic bird bath 416 having a ceramic bowl 420 that is supported upon a metal stand 418. It is believed that the best method for applying an antimicrobial agent to each of the metal stand 418 and ceramic bowl 420 is through an application of a coating to the surface of the stand 418 and bowl 420 that contains an antimicrobial agent. A nylon mesh suet containing bag 422 is shown at Fig. 15. Nylon bag 422 is designed to receive a cake of suet, and includes a mesh-like screen so the birds can poke their beaks through the holes in the mesh to eat the suet contained therein. It is believed that the best method for applying an antimicrobial agent to the nylon mesh bag 422 is through a coating process, that can be applied either by spraying an antimicrobial agent solution into the nylon mesh, or else dipping the nylon mesh in an antimicrobial solution.

A bird care device cleaning brush is shown at Fig. 16. The bird care device cleaning brush 428 has a plastic handle 430, and a plurality of nylon bristles 434. It is believed that the best way for incorporating an antimicrobial agent into the brush is by incorporating it into the plastic handle 430, and applying a coating to the nylon bristles 434.

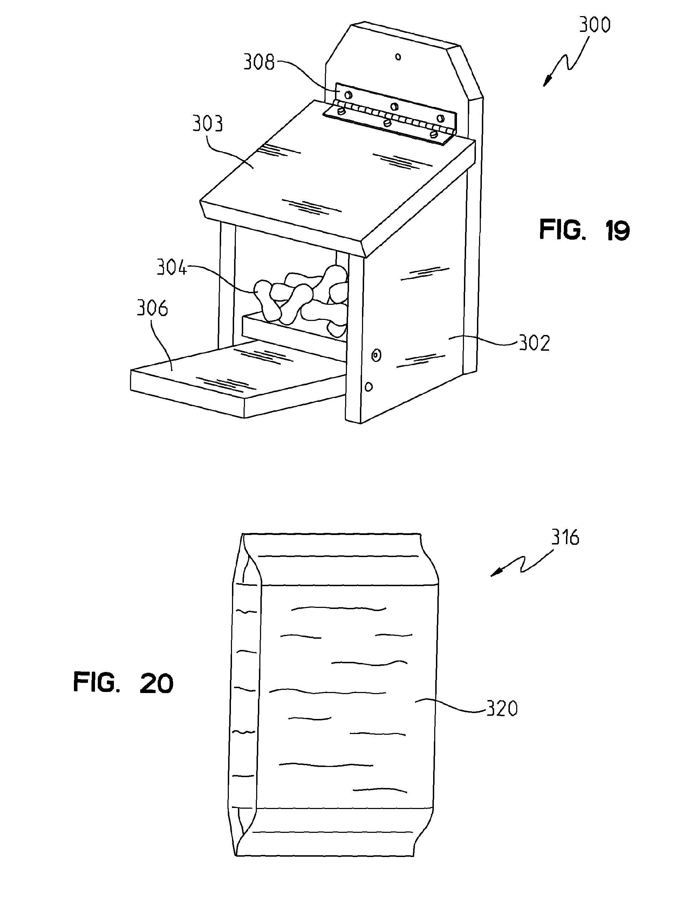

Turning now to Fig. 19, a squirrel feeder 300 is shown. The squirrel feeder 300 includes a generally wooden or recycled body 302. The body 302 includes a lid 303 that is hingedly coupled to a back plate by a metal hinge 308. A transparent plastic front panel 304 is provided, so that the squirrels can see the feed (here shown as peanuts) contained within the hopper, and so that the user can determine the level of feed within the hopper. A perch member 306 is provided on which the squirrel can rest and sit while eating the nuts from the feeder 300.

A seed bag 316 is shown in Fig. 20. The seed bag 316 has a paper or plastic body 320. Body is preferably made from either a heavy duty paper or plastic material. If the body 320 is comprised of plastic, the antimicrobial agent can be either incorporated into the plastic, or applied as a surface coating. Similarly, the antimicrobial agent can be applied as a surface coating if a paper body 320 is used for the seed bag 316.

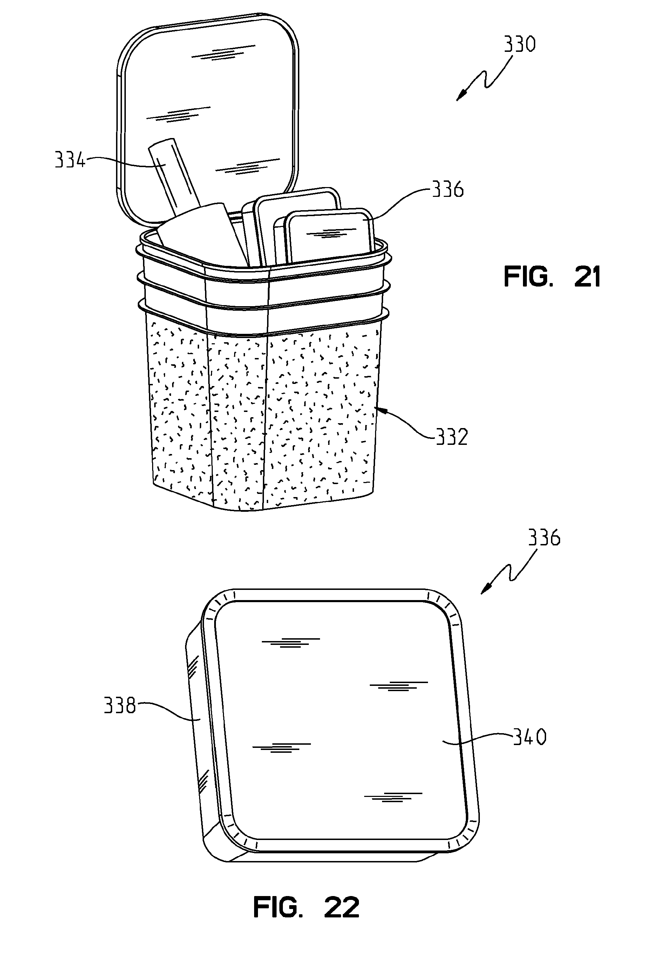

A seed container 330 and accessories therefor are shown in Fig. 21. The seed container 330 comprises a bucket-like device that includes a lid. The container is preferably made from a plastic material, so that the body 332 is plastic. As the feed within the seed container 330 is a granular or seed-like material, a plastic scoop 334 can be provided to accompany the container 330. Additionally, one or more suet containers 336 are shown as being placed in the container 330, that, can be sold together as a package.

The suet container 336 is best shown in Fig. 22. The suet container 336 includes a body 338, and a lid 340. The body 338 is preferably made from either a plastic material, a paper material, or a metal material. A lid 340 is preferably made from a coated paper material. The antimicrobial agent can be incorporated into the coating that is placed on the cardboard backing that forms the lid member 340. Alternately, the suet cake can be shrink-wrapped in a plastic film, with a label adhesively applied to the outer surface of the shrink wrap. The shrink-wrapped and labeled cake can then be placed in a plastic tray.

As set forth above, all of the various devices shown in the drawings discussed above have an antimicrobial agent incorporated therein, according to the present invention. It will also be appreciated that other bird care devices exist, that can have an antimicrobial agent incorporated therein according to the present invention.

Although the invention has been described in detail with reference to certain preferred embodiments, it will be appreciated that the invention is not limited to the particular descriptions herein, but rather, limited only in scope by the claims presented below.

## Claims

1. A wild animal care device (100...) for use with wild animals comprising a device body (102) including a silver containing antimicrobial agent applied to the device body (102) in a quantity sufficient to exhibit antimicrobial activity.

2. The wild animal care device of Claim 1 wherein the silver containing antimicrobial agent comprises a controlled release antimicrobial agent including silver ions in a zeolite carrier.

3. The wild animal care device of Claim 1 or 2 wherein the wild animal care device (100...) includes a plastic portion (102), and the silver containing antimicrobial agent is incorporated into the plastic of the plastic portion (102).

4. The wild animal care device of Claim 3 wherein the plastic portion (102) comprises a plastic to which the silver containing antimicrobial agent was added prior to any forming of the plastic portion.

5. The wild animal care device (100...) of Claim 3 or 4 wherein the silver containing antimicrobial agent comprises silver ions in a zeolite carrier that are randomly oriented and distributed through the plastic.

6. The wild animal care device (100...) of Claim 1 or 2 wherein the wild animal care device includes a plastic portion having a surface and the silver containing antimicrobial agent is incorporated into a coating applied to the surface of the plastic portion (102).

7. The wild animal care device of Claim 1 or 2 wherein the wild animal care device is selected from the group consisting of bird feeders (30), bird houses (100) squirrel feeders (300), bat houses (230), bird baths (416), bird poles (18, 20), bird hangers (17) suet feeders (210), butterfly feeder (240) seed bag (316), suet container (336), wild animal care device cleaning members (428), and bird pole accessories (24, 27).

8. The wild animal care device of Claim 7 wherein the wild animal care device (100) includes a body (102), and the silver containing antimicrobial agent is incorporated into the body (102) of the wild animal care device.

9. The wild animal care device of Claim 7 wherein the wild animal care device (100) includes a surface, and the silver containing antimicrobial agent is applied to the surface.

10. The wild animal care device of Claim 2 and 7 wherein the silver ions and zeolite carrier of the antimicrobial agent are randomly distributed through the body (102) of the wild animal care device (100).

11. The wild animal care device of Claim 1 or 2 wherein the device (10) includes a metal portion (18) having a surface and the silver containing antimicrobial agent is applied to the surface of the metal portion.

12. The wild animal care device of Claim 1 or 2 wherein the device (10) includes a metal portion (18) having a surface, and a coating applied to the surface of the metal portion, the silver containing antimicrobial agent being incorporated into the coating.

13. The wild animal care device of Claim 12 wherein the coating comprises at least one of a powder coating, paint and varnish-type coating.

14. The wild animal care device of Claim 12 or 13 wherein the silver containing antimicrobial agent comprises silver ions in a zeolite carrier that are randomly distributed through the coating.

15. The wild animal care device of Claim 1 or 2 wherein the device (100...) includes a wood portion (102) having a surface, and the silver containing antimicrobial agent comprises silver ions in a zeolite carrier that are distributed through a coating applied to the surface of the wood portion.

16. The wild animal care device of Claim 1 or 2 wherein the device (100...) includes a wood portion (102) having a body (102) with a surface, and the silver containing antimicrobial agent comprises silver ions in a zeolite carrier that is pressure applied to the body and the surface of the wood portion.

17. The wild animal care device of Claim 1 or 2 wherein the device (400) includes a ceramic portion (400) and the silver containing antimicrobial agent comprises silver containing ions in a zeolite carrier that are distributed through a coating applied to the surface of the ceramic portion (400).

18. The wild animal care device of Claim 1 or 2 wherein the device (408) includes a concrete portion (408), and the silver containing antimicrobial agent comprises silver containing ions in a zeolite carrier that are distributed through a coating applied to the surface of the concrete portion.

19. The wild animal care device of any preceding claim wherein the silver containing antimicrobial agent comprises silver containing ions in a zeolite carrier.

20. The wild animal care device of Claim 1 wherein the silver-containing antimicrobial agent is applied by the being dipped in a solution containing the silver-containing antimicrobial agent.
